# EUROPEAN PATENT SPECIFICATION

(11) **EP 0 468 540 B1**
(45) Date of publication and mention of the grant of the patent: **09.11.1994**
(21) Application number: 91115149.6
(22) Date of filing: 07.09.1987
(51) Int. Cl.: B01D 53/34

(54) **Controlling emission of pollutants from coal-fired boiler systems**
Verringerung der Schadstoffemission in Rauchgasen von Kohlefeuerungen
Contrôle du dégagement des produits polluants d'une chaudière à charbon

(30) Priority: 19.11.1986 US 932754
(43) Date of publication of application: 29.01.1992
(62) Divisional of application: 87307884.4
(73) Proprietor: THE BABCOCK & WILCOX COMPANY, New Orleans, Louisiana 70160 (US)
(72) Inventor: Doyle, John B., Massillon, Ohio 44646 (US); Pirsh, Ed A., Akron, Ohio 44313 (US); Downs, William, Alliance, Ohio 44601 (US)
(74) Representative: Purvis, William Michael Cameron

(56) References cited:
- EP-A- 0 217 733
- DE-A- 2 549 896
- DE-A- 3 235 020
- US-A- 4 464 350

## Description

This invention relates to controlling emission of pollutants from coal-fired boiler systems, for example in coal-fired electric power plants.

Advanced control technologies have rapidly evolved during the past two decades for dealing with emission from coal-fired power plants of particulates, sulphur oxides and nitrogen oxides.

A dramatic shift to low-sulphur coals, which produce high-resistivity fly-ashes, that are more difficult to collect, and the concurrent demand for increased particulate efficiency, has placed a heavy burden on conventional dust collectors (electrostatic precipitators) employed in these applications. Consequently, in the late 1970s the power generator industry began, on a significant scale, to utilise alternative technology --fabric filterhouses-- for particulate control.

In a bag filterhouse (baghouse), fly-ash is separated from flue gas by filtration, i.e. the fly-ash is collected on the upstream side of tubularly shaped fabric filter bags as the gas is directed through the filter bags. The flue gas passes through a filter bag, typically from the inside out, and the fly-ash is collected as so-called filter cake. The material collected on the bag becomes part of the filtering medium. After a certain build-up of filter cake over the course of operation, the bags must be cleaned to avoid excessive pressure drop in order to maintain proper gas volume flow. The use of a bag filterhouse gives the power generator company the option of switching coals since bag filterhouse collection efficiency is relatively insensitive to fuel characteristics.

Nevertheless, as coal burns, most of the sulphur content is converted to sulphur oxides (SOₓ), typically SO₂ and SO₃. In addition, oxides of nitrogen (collectively referred to as NOₓ) are formed. Utilisation and placement of NOₓ and SOₓ control equipment upstream of the bag filterhouse will influence inlet conditions. Overall location of the bag filterhouse relative to such equipment, as well as the plant air heaters, flue gas temperature,flue gas composition, and fabric filter specifications including material properties such as composition, tensile strength, abrasion resistance, chemical resistance and temperature limitations, comprise the major parameters which must be carefully considered, integrated and controlled in order to achieve satisfactory overall plant emission control.

Our US Patent No.US-A-4309386 discloses a system in which a hot catalytic baghouse (greater than 316°F (600°F)) is used for simultaneous particulate removal and NOₓ reduction. According to US-A-4309386, filter bags of the baghouse are treated with a catalyst to facilitate a selective catalytic reduction process while simultaneously filtering out particulate matter from the gas stream. The baghouse is situated downstream from an ammonia injection system. In the baghouse, the flue gas stream is exposed to the treated bags to effect NOₓ removal. However, that system has several potential shortcomings. In particular, bags impregnated with the catalyst tend to have an unduly limited life span, necessitating periodic replacement of the entire bag, and the catalyst is subject to SOₓ poisoning which can lead to loss of ability to reduce NOₓ in the presence of gases containing high quantities of SOₓ.

Therefore, continuing improvements are being sought in emission control systems employing fabric baghouses with satisfactory control of SOₓ and NOₓ emissions.

According to the invention there is provided a method of controlling emission of pollutants from a coal-fired boiler system, which system includes a boiler, an economiser, a fabric filter baghouse and an air heater in a serial fluid communication path, by removing, in a temperature range of 316°C to 427°C (600°F to 800°F), SOₓ, NOₓ and particulates from a combustion flue gas stream passing through said path, the method comprising the steps of:
(a) adding a reagent, which reagent is also a catalyst, selected from the group consisting of alkali and alkaline earth carbonates or oxides in powdered form, and ammonia into the combustion flue gas stream upstream of the fabric filter baghouse intermediate the boiler and the baghouse in a temperature zone having a temperature below the melting point of the reagent;
(b) reacting some of the reagent and ammonia with the SOₓ and NOₓ to form reaction products while passing the flue gas stream to the baghouse;
(c) separating the particulates, the reaction products and the reagent from the flue gas within the temperature range by filtration in the baghouse to form a filter cake;
(d) passing the flue gas stream through the filter cake to react additional reagent and ammonia with the SOₓ and NOₓ to form additional reaction products and cleansed gas; and
(e) venting the cleansed gas out of the baghouse through the air heater.

Thus a suitable reagent can be pneumatically injected into a boiler in fine powder form, in a temperature zone below the melting point of the reagent, upstream of a hot baghouse which is operating in a temperature range of approximately 316°C to 427°C (600°F to 800°F) and which is located between an exit of an economiser of the boiler and an air heater. Ammonia is also injected in this vicinity. A reaction between the NOₓ and ammonia converts the NOₓ to harmless nitrogen gas and a reaction between SOₓ and the reagent produces a solid particulate which continues to flow with the flue gas. The mixture of reactants, reaction products and flue gases continues to flow to the baghouse, where the particulates are separated from the flue gas.

The injection technique advantageously provides an extended time for reaction of the reagent and the SOₓ and NOₓ as the flue gas stream flows from the injection position to fabric filter bags of the baghouse. Further reaction takes place as the solids are collected in the filter bags as filter cake and the flue gases continue to pass through the filter cake.

The reagent is removed from the baghouse, along with the fly-ash,for regeneration. Poisoning of the catalyst with SOₓ is no longer a problem since the method seeks to achieve reaction of the reagent with SOₓ to remove the sulphur oxides from the gas stream and the reaction is otherwise acceptable due to the continuous replenishment of the reagent by regeneration.

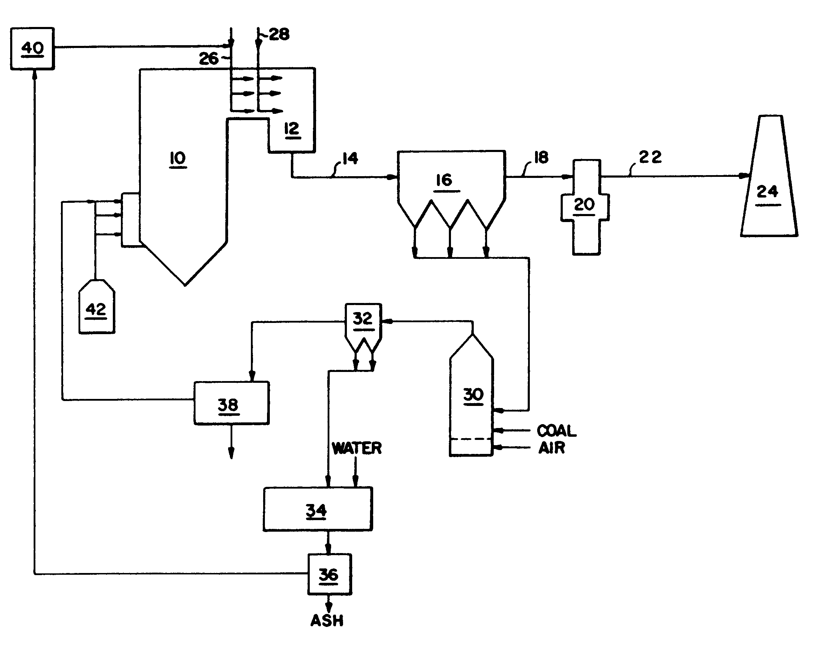

The invention will now be further described, by way of illustrative and non-limiting example, with reference to the accompanying drawing, the sole figure of which is a simplified flow diagram illustrating a preferred arrangement for carrying out a method embodying the invention.

The drawing shows a coal-fired boiler 10 that includes an economiser 12 which is designed, as is well known, to remove heat from the combustion flue gases after the gases leave steam-generating and superheating sections of the boiler 10. An outlet of the economiser 12 is connected through a flue gas conduit 14 to a baghouse 16 in which particulates are collected in filter bags (not shown). The treated gas is discharged from the baghouse 16 through a conduit 18 to an air preheater 20 and then through a conduit 22 to a stack 24 for ultimate discharge to the atmosphere.

Injection lines 26,28 are provided for injecting a solid reagent which is also a catalyst and ammonia (NH₃), respectively, into a zone, having a temperature below the reagent melting point,upstream of the baghouse 16. For example, as shown in the drawing, the solid reagent and ammonia are injected upstream of the economiser 12, i.e. intermediate the boiler 10 and the economiser 12.

Pneumatic injection of the reagent, via wall injectors, is preferred. The ammonia is preferably injected between a primary superheater and the economiser 12 as placement further upstream would result in excessive loss of ammonia by oxidation. The temperature at the economiser inlet will typically be between 371°C and 538°C (700°F and 1000°F), and the preferred operating range is 316°C to 427°C (600°F to 800°F). Reagents are selected which will not react with ammonia in this temperature range.

The combustion flue gas, which contains particulates, SOₓ and NOₓ, reacts with the reagent as it flows through the economiser 12 and to the baghouse 16. As the gas flows from the injection point through the baghouse 16, the reagent reacts with SOₓ and NOₓ and ammonia. The reagent reacts further as it collects in the filter bags and the flue gas passes through it.

The reagent is alkali and alkaline earth hydroxides, carbonates or oxides.

The spent reagent material is removed from the baghouse 16 with the fly-ash. The spent material contains sulphur from the flue gas in the form of sulphates and sulphites. The spent material and fly-ash are then fed into a fluid bed gasifier 30 where coal is added as a fuel source and the temperature of the sulphated spent material is raised to a level where the sulphur is driven off in the form of sulphur dioxide and hydrogen sulphide. The reagent is then removed from the gas stream with the fly-ash via a particulate collector 32, such as a secondary baghouse,precipitator, or high efficiency cyclone. The collected solids are then added to water in a mixing tank 34 to form a slurry. The reagent goes into solution. The slurry is then directed to a solid separator 36, such as a belt filter or centrifuge, where the ash is removed from the system. The solution containing the regenerated reagent is then recycled as make-up back to the boiler 10. A drier 40 may be required prior to injecting the reagent into the boiler.

The spent gas from the fluid bed gasifier 30 may be taken to a Klaus plant 38 where the SO₂ and H₂S may be recovered in the form of elemental sulphur. A portion of the steam produced in the fluid bed gasifier 30 may be used for the operation of the Klaus plant 38. The low J(Btu) gas would then be sent back to the boiler 10 as additional fuel with pulverised coal from a pulveriser 42 or could be used for other plant process requirements. There is a possibility that this gas could be used in the production of ammonia which in turn could be used as the make-up for the NOₓ reduction process.

## Claims

1. A method of controlling emission of pollutants from a coal-fired boiler system, which system includes a boiler (10), an economiser (12), a fabric filter baghouse (16) and an air heater (20) in a serial fluid communication path, by removing, in a temperature range of 316°C to 427°C (600°F to 800°F), SOₓ, NOₓ and particulates from a combustion flue gas stream passing through said path, the method comprising the steps of:
(a) adding (26, 28) a reagent, which reagent is also a catalyst, selected from the group consisting of alkali and alkaline earth carbonates or oxides in powdered form, and ammonia into the combustion flue gas stream upstream of the fabric filter baghouse (16) intermediate the boiler and the baghouse in a temperature zone having a temperature below the melting point of the reagent;
(b) reacting some of the reagent and ammonia with the SOₓ and NOₓ to form reaction products while passing the flue gas stream to the baghouse (16);
(c) separating the particulates, the reaction products and the reagent from the flue gas within the temperature range by filtration in the baghouse (16) to form a filter cake;
(d) passing the flue gas stream through the filter cake to react additional reagent and ammonia with the SOₓ and NOₓ to form additional reaction products and cleansed gas; and
(e) venting the cleansed gas out of the baghouse (16) through the air heater (20).

2. A method according to claim 1, wherein the reacting step (b) comprises reacting some of the reagent and ammonia with the SOₓ and NOₓ to form reaction products while passing the flue gas stream through the economiser (12) to the baghouse (16).

3. A method according to claim 1 or claim 2, comprising reclaiming reagent from the cake by heating (30) the cake to a temperature sufficient to volatilise and drive off sulphur dioxide and hydrogen sulphide from the cake and form remaining solids containing recoverable reagent slurrying the collected solids with water, separating (32) the recoverable reagent from the solids, and wherein the adding step (a) includes passing the recovered reagent into the combustion gas stream.

## Patentansprüche

1. Verfahren zur Steuerung der Schadstoffemission aus einem kohlebefeuerten Kesselsystem, welches einen Kessel (10), einen Rauchgasvorwärmer (12), ein Tuchfiltersackgehäuse (16) und einen Lufterhitzer (20) in einer Reihe auf eine Fließmittelverbindungsweg einschließt, durch Entfernung von SOₓ, NOₓ und Feinstoffen in einem Temperaturbereich von 316 bis 427 °C (600 bis 800 °F) aus einem Verbrennungsrauchgasstrom, der diesen Weg passiert, wobei das Verfahren die Stufen umfaßt, in denen man
a) ein Reagenz, welches auch ein Katalysator ist, der aus der Gruppe ausgewählt ist, die aus Alkali- und Erdalkalicarbonaten oder -oxiden in Pulverform besteht, und Ammoniak dem Verbrennungsrauchgasstrom aufstromwärts von dem Tuchfiltersackgehäuse (16) zwischen dem Kessel und dem Sackgehäuse in einer Temperaturzone mit einer Temperatur unterhalb des Schmelzpunktes des Reagenz zusetzt (26, 28),
b) etwas von dem Reagenz und Ammoniak mit dem SOₓ und NOₓ unter Bildung von Reaktionsprodukten umsetzt, während der Rauchgasstrom zu dem Sackgehäuse (16) geht,
c) die Feinstoffe, die Reaktionsprodukte und das Reagenz aus dem Rauchgas in dem Temperaturbereich durch Filtration in dem Sackgehäuse (16) unter Bildung eines Filterkuchens abtrennt,
d) den Rauchgasstrom durch den Filterkuchen führt, um weiteres Reagenz und Ammoniak mit dem SOₓ und NOₓ unter Bildung weiterer Reaktionsprodukte und von gereinigtem Gas umzusetzen und
e) das gereinigte Gas aus dem Sackgehäuse (16) durch den Lufterhitzer (20) abbläst.

2. Verfahren nach Anspruch 1, bei dem die Reaktionsstufe (b) eine Umsetzung von etwas des Reagens und Ammoniak mit dem SOₓ und NOₓ umfaßt, um Reaktionsprodukte zu bilden, während der Rauchgasstrom durch den Rauchgasvorwärmer (12) zu dem Sackgehäuse (16) geht.

3. Verfahren nach Anspruch 1 oder Anspruch 2, bei dem man Reagens aus dem Filterkuchen wiedergewinnt, indem man den Filterkuchen auf eine ausreichende Temperatur erhitzt (30), um Schwefeldioxid und Schwefelwasserstoff aus dem Filterkuchen zu verflüchtigen und auszutreiben und zurückbleibende, aus dem Filterkuchen gewinnbares Sulfid enthaltende Feststoffe zu bilden und zurückbleibende, gewinnbares Reagens enthaltende Feststoffe zu bilden, die gesammelten Feststoffe mit Wasser aufschlämmt, das gewinnbare Reagens von den Feststoffen abtrennt (32), wobei die Zugabestufe (a) ein Überführen des gewonnenen Reagens in den Verbrennungsgasstrom einschließt.

## Revendications

1. Procédé de contrôle de dégagement de produits polluants d'un système à chaudière à charbon, lequel système comprend une chaudière (10), un économiseur (12), un dispositif à manches de filtrage en tissu (16) et un réchauffeur d'air (20) en un passage de communication de fluide en série, par extraction, dans une plage de températures de 316°C à 427°C (600°F à 800°F), de SOₓ, NOₓ et de matières particulaires d'un flux de gaz de combustion passant dans ledit passage, le procédé comprenant les phases consistant à :
(a) ajouter (en 26, 28) un réactif, lequel réactif est également un catalyseur, sélectionné parmi le groupe consistant en carbonates ou oxydes alcalins et alcalino-terreux en poudre, et de l'ammoniaque dans le flux de gaz de combustion en amont du dispositif à manches de filtrage en tissu (16) entre la chaudière et le dispositif à manches dans une zone de températures avec une température inférieure au point de fusion du réactif ;
(b) faire réagir une partie du réactif et de l'ammoniaque avec les SOₓ et NOₓ pour former des produits de réaction tout en acheminant le flux de gaz de combustion jusqu'au dispositif à manches (16) ;
(c) séparer les matières particulaires, les produits de réaction et le réactif du gaz de combustion au sein de la plage de température par filtration dans le dispositif à manches (16) pour former un gâteau de filtrage ;
(d) faire passer le flux de gaz de combustion dans le gâteau de filtrage pour faire réagir le réactif et l'ammoniaque supplémentaire avec les SOₓ et NOₓ pour former des produits de réaction supplémentaires et un gaz purifié ; et
(e) expulser le gaz purifié du dispositif à manches (16) via le réchauffeur d'air (20).

2. Procédé suivant la revendication 1, où la phase de réaction (b) comporte de faire réagir une partie du réactif et de l'ammoniaque avec les SOₓ et NOₓ pour former des produits de réaction tandis que l'on fait passer le flux de gaz de combustion à travers l'économiseur (12) jusqu'au dispositif à manches.

3. Procédé suivant la revendication 1 ou la revendication 2, comportant de récupérer le réactif du gâteau par chauffage (30) du gâteau à une température suffisante pour volatiliser et chasser du gâteau le dioxyde de soufre et la sulfure d'hydrogène, et de former, à partir du gâteau des solides résiduels contenant des sulfures récupérables, et former des solides résiduels contenant du réactif récupérable, par mise en suspension des solides collectés avec de l'eau, séparation (32) du réactif d'avec les solides, et où la phase d'addition (a) comprend de faire passer le réactif récupéré dans le flux de gaz de combustion.
